# EUROPEAN PATENT SPECIFICATION

(11) **EP 1 722 531 B1**
(45) Date of publication and mention of the grant of the patent: **11.11.2009**
(21) Application number: 05103045.0
(22) Date of filing: 18.04.2005
(51) Int. Cl.: H04L 29/06

(54) **Method and system for detecting malicious wireless applications**
Verfahren und System zur Erkennung von bösartigen drahtlosen Anwendungen
Procédé et système pour détecter des applications sans fil malveillants

(43) Date of publication of application: 15.11.2006
(73) Proprietor: Research In Motion Limited, Waterloo, Ontario N2L 3W8 (CA)
(72) Inventor: Bibr, Viera, Kilbride, Ontario L0P 1G0 (CA); Fritsch, Brindusa, Toronto, Ontario M9C 2J9 (CA); Matovsky, Michael, Toronto, Ontario M2R 2E2 (CA); Karmakar, Srimantee, Mississauga, Ontario L5M 5W1 (CA); Rogers, Jeffrey, Scarborough, Ontario M1E 1B3 (CA); Shenfield, Michael, Richmond Hill, Ontario L4C 3S9 (CA); Vitanov, Kamen B., Mississauga, Ontario L5M 6E8 (CA)
(74) Representative: Patel, Binesh

(56) References cited:
- WO-A-01/67785
- WO-A-01/92981
- WO-A-03/61319
- US-A- 5 987 611
- US-A1- 2003 200 462
- US-A1- 2005 086 500
- MERCURY: "Managing the Performance of Wireless Applications" MERCURY INTERACTIVE, [Online] 28 October 2004 (2004-10-28), XP002334475 Retrieved from the Internet: URL:http://web.archive.org/web/20041028165 240/http://www.mercury.com/us/accelerate/n ov-dec01/technology_focus/> [retrieved on 2005-07-04]

## Description

The present invention relates to wireless communications, and in particular to a method and system for detecting and handling malicious wireless applications.

The number and variety of wireless terminal devices, such as mobile telephones, personal computers and PDAs with wireless communication capabilities, self service kiosks and two-way pagers is rapidly increasing. Software applications which run on these devices increase their utility. For example, a mobile phone may include an application which retrieves the weather for a range of cities, or a PDA may include an application that allows a user to shop for groceries. These software applications take advantage of wireless connectivity to a data network (such as the internet) in order to provide timely and useful services to users.

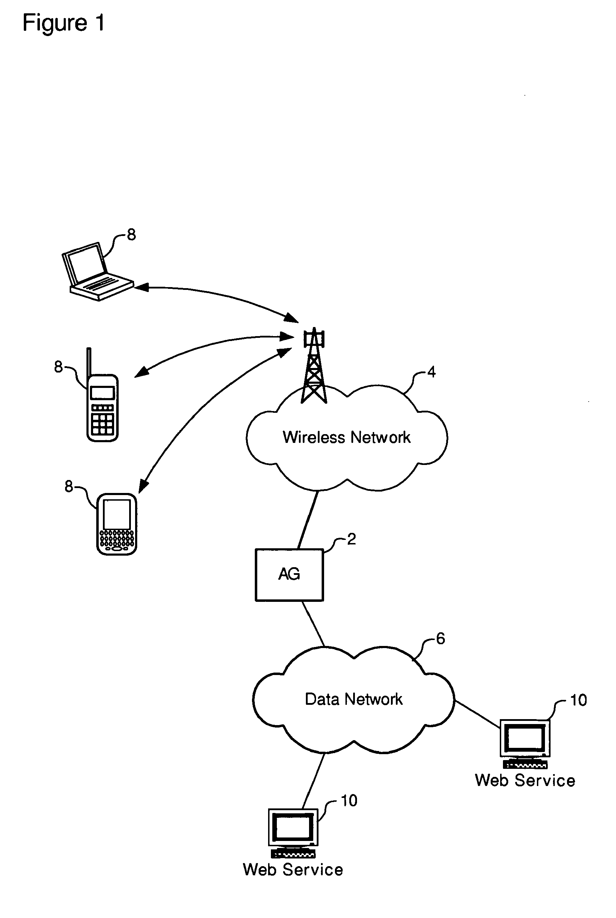

Referring to FIG. 1, a network facilitating the use of software-driven wireless terminal devices generally comprises an Application Gateway (AG) 2 coupled between a wireless network 4 and a data network 6, such as for example, the internet; and one or more wireless terminal devices 8 coupled to the wireless network 4, and hosted by the AG 2.

The AG 2 generally operates to mediate message flows between the terminal devices 8 and data services 10 accessible through the data network in the manner describe in Applicant's co-pending United States Patent Publications Nos. 2004/0215700 and 2004/0220998, the contents of both of which are incorporated herein by reference.

In general, the terminal devices 8 can be any of a wide variety of software-controlled wireless devices including, but not limited to mobile telephones, personal computers and PDAs with wireless communication capabilities, self service kiosks and two-way pagers. As is well known in the art, such devices generally comprise a microprocessor which operates under software control to provide the functionality of the terminal device 8.

As described in Applicant's co-pending United States Patent Publications Nos. 2004/0215700 and 2004/0220998, operation of the AG 2 enables a wireless application executing in a terminal device 8 to communicate with web services offered 10 through the data network 6. This operation may, for example, including accessing HTML content, and downloading files from back-end data sources (not shown) connected to the data network 6. In order to reduce device resource requirements, each wireless application provides User Interface (UI) functionality (for both display and user input) appropriate to the capabilities of the particular terminal device 8. At least a portion of the application logic is executed on the AG 2, so that signalling between the AG 2 and the terminal device 8 is limited to downloading application data for local storage and display on the terminal device 8, and uploading user inputs. The application logic executing on the AG 2 communicates with a web service 10 or back-end data source (not shown) on the data network 6, in response to the user input received from the terminal device 8, to provide the functionality of wireless application. This arrangement enables a user of the terminal device 8 to access and use the web service 10, but with reduced signalling traffic to/from the terminal device 8 to thereby limit wireless network bandwidth and device resource requirements.

As will be appreciated, most wireless applications are message driven. That is, wireless applications exchange messages with a host application gateway 2 (server) which performs the majority of the application logic. Such a system is vulnerable to high message traffic, especially on the terminal device 8, where the resources are most severely limited. Additionally, such message driven systems are vulnerable to message processing errors.

A publication entitled "Managing the Performance of Wireless Applications" issued by Mercury Interactive (Online) 28^{th} October 2004 discloses a similar arrangement to the foregoing but one in which the method of managing wireless applications is directed to measuring transaction response times as a measure of the end-to-end user's experience, and then issuing alerts to system administrators within the enterprise.

US2003/200462 discloses a system and method for detecting abnormal activity of a software system based on behavioural information obtained from an instrumented computer program while it executes. As the program executes, it expresses information about the sequence and frequency with which program modules are called. Over time, this sequence and frequency defines the normal behaviour of the program, and the information expressed on any given run is compared to this normal behaviour. Statistical analysis of the differences between the normal behaviour and the current run can be used to detect unauthorized or abusive use of the program.

WO01/92981 discloses a security system for computers, capable of creating automatic segregation between programs. The system is capable of monitoring and learning the reasonable behaviour of the operating system and software applications in a computer system and enforcing generic security rules in order to reduce the chance of the users of said computer being cheated by malicious software applications.

US5987611 discloses a method for managing Internet access for a client computer in a network. The method comprises providing at the client computer a client monitoring process and providing at another computer on the network a supervisor process. The supervisor process specifies rules which govern Internet access by client computers; transmit at least a subset of said rules to a client computer; at the client monitoring process, trapping a request for Internet access from the particular client computer; and processing the request for Internet access by (i) determining whether the request for Internet access violates any of the rules transmitted to the client computer, and (ii) if the request for Internet access violates any of the rules transmitted to the client computer, denying the request for Internet access.

WO01/67785 discloses a system and method in which data content and code stored in a third party repository can be downloaded through a network to a node for execution. When the node requests a download of data content and/or code, the requested data content and code are intercepted by a "sanity check point function". An emulator, which operates to emulate the node, then interacts with the data content and code in the sanity check point, so that "code assessment means" can assess the operational status of the data content and code. If the "code assessment means" determines that a "predetermined operational status" is satisfied, then the data content and code are forwarded to the node.

WO03/061319 discloses a digital mobile radio network component and a method for the protection against undesired data in a digital mobile radio network. The digital mobile radio network or the mobile radio device automatically initiates a check-up whether the data requested or transmitted by a mobile radio device are undesired data.

With the increasing popularity and functionality of wireless services, the risk of malicious mobile applications is also increasing. Malicious mobile applications can cause symptoms that can result in security threats, unnecessarily high signal traffic, exhaustion of resources (typically memory) on the terminal device and overall negative user experience. A high message traffic attack can cause denial-of-service on the AG 2 and potentially crash the terminal device 8.

For the purposes of the present application, the term "malicious mobile application" shall be understood to refer to any wireless application which generates an excessive volume of message traffic. In some cases, a malicious mobile application may be deliberate; for example a "Mobile Virus" which attempts to e-mail copies of itself to each person in a user's address book. In other cases, a malicious mobile application may the inadvertent result of poor programming; for example a wireless application capable of generating an infinite loop. In all cases, operation of the malicious mobile application results in the generation of excessive message traffic, which taxes bandwidth of the wireless network 4 and local resources of the terminal device 8.

To date, there have only been a limited number of cases of widespread mobile viruses. However, as terminal devices rapidly evolve, and become capable of running complex applications, there is an urgent need to protect both the data managed by mobile applications and the overall mobile user experience.

Accordingly, methods and systems for detecting and handling malicious wireless applications remains highly desirable.

Accordingly, the present invention preferably provides methods and systems for detecting and handling malicious wireless applications.

Features of the invention are defined in the appended independent claims. Further optional features of the invention are defined in the dependent claims.

Thus, an aspect of the present invention preferably provides a method of detecting and managing malicious operation of a wireless application executing on a terminal device of a wireless network, the method comprising steps of: providing an application gateway for hosting the terminal device, the application gateway executing application logic of the wireless application; and in the application gateway: monitor execution of the wireless application to detect symptoms of malicious operation; and if one or more symptoms of malicious operation are detected, inhibit further operation of the wireless application.

### BRIEF DESCRIPTION OF THE DRAWINGS

Further features and advantages of the present invention will become apparent from the following detailed description, taken in combination with the appended drawings, in which:
FIG. 1 is a block diagram schematically illustrating a network in which the present invention may be deployed;
FIG. 2 is a block diagram schematically illustrating principal components and operation of a representative system in accordance with an embodiment of the present invention; and
FIGs. 3a and 3b are flowcharts illustrating principle steps in a method for handling potentially malicious wireless applications in accordance with a representative embodiment of the present invention.

It will be noted that throughout the appended drawings, like features are identified by like reference numerals.

### DETAILS

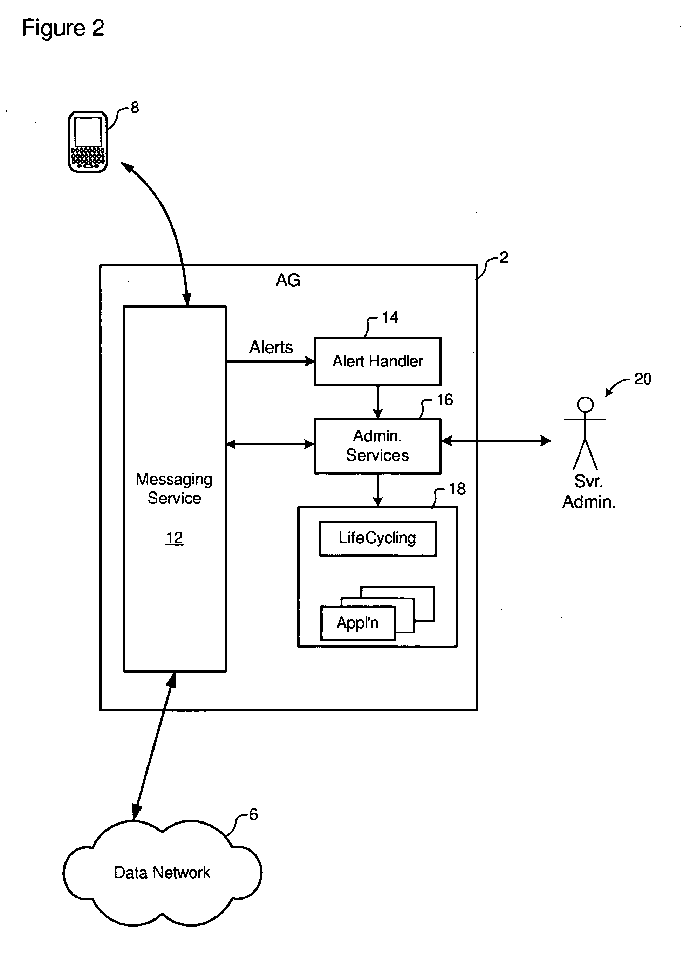

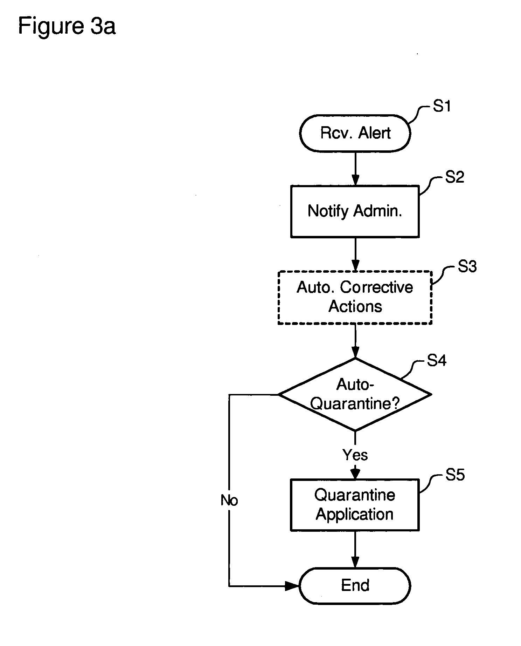

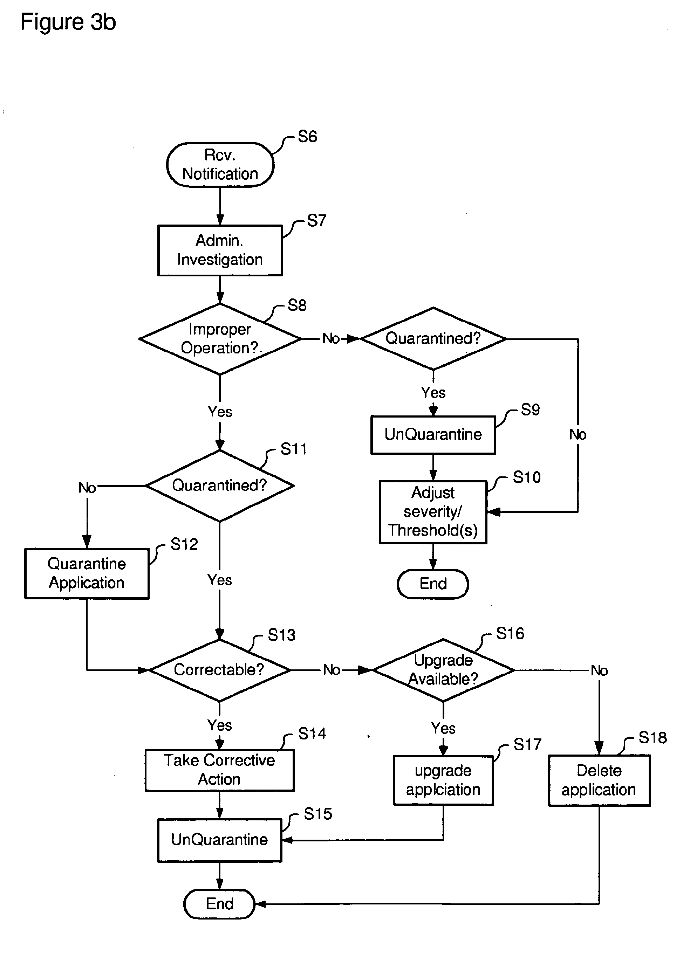

The present invention provides methods and systems for detecting and handling malicious wireless applications. A representative embodiment of the invention is described below, by way of example only, with reference to FIGs. 2 and 3.

As shown in FIG. 2, a system in accordance with a representative embodiment of the present invention comprises a messaging service 12; an alert handler 14 and an Administration Services system 16. These elements, each of which may be composed of any suitable combination of hardware and software, may conveniently be instantiated within the application gateway 2, but this is not necessary.

The Administration Services system 16 provides, among other things, a suite of lifecycling tools 18 by which a system administrator 20 can manage the operation of wireless applications executing on terminal devices 8 hosted by the application gateway 2. Representative lifecycling tools may, for example, provide functionality for: quarantining and un-quarantining a wireless application; forcing deletion of a wireless application; and forcing an upgrade of a wireless application based, for example, on upgrade scripts provided by an application developer. All of these functions will be described in greater detail below.

The messaging service 12 generally operates to monitor execution of each wireless application executing on a terminal device 8 hosted by the application gateway 2. As will be described in greater detail below, the messaging service 12 accumulates various execution metrics based on message flows and AG processing operations associated with the wireless application, and uses these execution metrics to detect symptoms of malicious operation of a wireless application. This approach is based on the premise that malicious applications produce recognisable symptoms, such as, for example: high message traffic; reoccurring message processing errors, for example due to improper use of back-end/servers); and repeated instantiation of the same data component or object, for example due to an infinite loop.

As may be appreciated, maintaining and analysing a complete historical record of the message flows and processing operations for each session of each wireless application executing on each one of a large number of hosted terminal devices is undesirably resource intensive, and therefore expensive. Accordingly, it is preferable to monitor the message flows and processing operations and accumulate various execution metrics, which are expected to be sensitive to malicious operation of a wireless application. Representative metrics include: a number of messages sent/received; a number and nature (e.g. back-end unavailable, back-end fault, internal error, etc) of processing errors; average, peak and current message flow rates (i.e. the number of messages sent/received per unit time) etc.

Each metric can then be compared (e.g. at regular intervals during a session) to a respective threshold value, which serves as an acceptable boundary on system behaviour. Threshold values may be set by the system administrator 20, or alternatively by an application developer. In cases where an application is not deliberately malicious, the latter option enables the threshold values to reflect the expected behaviour of the specific wireless application. In this case, threshold violations may indicate the presence of logic errors in the wireless application, and this information can be used by the application developer to develop improved versions of the application. When a threshold is violated, an alert is generated by the messaging service 12 and forwarded to the alert handler 14, which operates to trigger appropriate corrective action. Representative actions that may be taking in response to an alert message are described below with reference to FIGs. 3a and 3b.

As shown in FIG. 3a, when an alert message is received (step S1), the alert handler 14 forwards the alert message (along with information identifying at least the involved terminal device 8 and wireless application) to the system administrator 20 (step S2). This may, for example, be accomplished by way of an alert e-mail message. If desired, the alert handler 14 may also trigger (at S3) one or more methods of the administration services system 16 to implement auto-corrective actions and/or impose temporary restrictions on the involved wireless application, pending investigation by the system administrator 20. Representative auto-corrective actions may, for example, include forcing execution of a script that addresses a known issue with the application. Representative temporary restrictions may, for example, include restricting the allocation of bandwidth to the wireless application and/or limiting the flow rate of message traffic associated with the wireless application.

The alert handler can also determine (at S4) whether or not the wireless application should be quarantined pending investigation and resolution by the system administrator 20. This decision may, for example be based on a "severity level" of the alert. For example, the system administrator 20 may determine that certain metrics are particularly indicative of either the operation of malicious application code, or overall system performance. For these metrics, threshold violations will normally indicate that the overall operation of the application gateway 2 is being adversely affected, and may indicate the presence of a mobile virus. Accordingly, the system administrator 20 may assign a high severity level to these violations, which is included in the alert message generated by the messaging service 12. With this arrangement, the alert handler 14 can use the severity level to trigger automatic quarantining of any wireless application that violates a critical message flow or processing metric.

As may be seen in FIG. 3a, if the alert handler 14 determines that the wireless application should be quarantined (at S4), the alert handler 14 interacts with the administration services system 16 to trigger quarantining of the application (at S5).

In general, quarantining the application means that the application is prevented from sending or receiving messages, hence stopping it from performing any further malicious operations. Thus, execution of application logic on the AG 2 is frozen, and messaging to/from the terminal device 8 is blocked. In addition, any queued messages are saved, which facilitates investigation of the malicious behaviour by the system administrator 20. The application is kept in a "quarantined" state until the cause of the detected malicious behaviour (i.e. threshold violation) can be determined by the system administrator 20, and appropriate corrective action taken. Representative steps taken by the System administrator 20 and the administration services system 16 are described below with reference to FIG. 3b.

As shown in FIG. 3b, upon receipt (at S6) of the alert message from the alert handler 14, the system administrator may conduct an investigation (at S7) into the nature and cause of the malicious operation. For example, the system administrator 20 may determine whether or not the threshold violation actually represents improper or malicious operation of the wireless application (at step S8). If the wireless application is operating properly, then the alert message can be disregarded. If the application was quarantined at steps S4 and S5 above, then the application can also be "un-quarantined" (at Step S9). Un-quarantining the application re-enables the application to send and receive messages. Thus, execution of application logic on the AG 2 is allowed to resume, as is messaging to/from the terminal device 8. In addition, any queued messages can be released, so that the application can resume operation from the state it was in when it was quarantined. In addition, the system administrator 20 may also adjust (at step S10) the threshold value(s) used by the messaging service 12, and/or the severity level of the threshold violations, that gave rise to the original alert being sent to the alert handler 14. By adjusting threshold values, the system administrator 20 can prevent the messaging service 12 from generating spurious alerts. Adjusting the severity level allows the alert handler 14 to processes an alert generated by the messaging service 12, but without un-necessarily quarantining the application.

If an improper or malicious operation is found to have occurred (at step S8), then the system administrator 20 may determine (at Step S11), whether or not the wireless application has already been quarantined (i.e. by the alert handler 14). If not, then the system administrator 20 can force the application into quarantine (at S12). In either case, the system administrator 20 may determine (at Step S13), whether or not the wireless application can be repaired. If so, then the system administrator 20 can take appropriate repair steps (at Step S14) before un-quarantining the (repaired) application (at step S15). Representative repair may, for example, include forcing the download and execution of scripts to the involved terminal device that address known issues with the application, and/or update the execution state of the application so as to return the application to a healthy execution state. These operations, and the scripts that perform them, may, for example, be provided by the application developer based on known data components and application logic, and their intended execution states. If the wireless application cannot be repaired, then the system administrator 20 can determine whether or not there is an upgrade available for the wireless application (at step S16). If an update is available, the system administrator 20 may force installation of the upgrade (at step S17) before un-quarantining the (upgraded) application (at S15). On the other hand, if no upgrades are available, then the system administrator 20 can force deletion of the wireless application (step S18).

The embodiment(s) of the invention described above is(are) intended to be exemplary only. The scope of the invention is therefore intended to be limited solely by the scope of the appended claims.

## Claims

1. A method of detecting and managing malicious operation of a wireless application executing on a terminal device (8) of a wireless network (4), the method comprising steps of:
in an application gateway (2) for hosting the terminal device (8), executing application logic of the wireless application; and
in the application gateway (2):
monitoring execution of the wireless application to detect symptoms of malicious operation; and
if one or more symptoms of malicious operation are detected, inhibiting further operation of the wireless application.

2. A method as claimed in claim 1, wherein the step of monitoring execution of the wireless application comprises steps of:
accumulating one or more metrics associated with execution of the wireless application; and
comparing each metric to a respective predetermined threshold value.

3. A method as claimed in claim 2, wherein the metrics comprise any one or more of:
a number of messages sent/received;
a number of processing errors;
a type of processing error; and
a message flow rate.

4. A method as claimed in any one of claims 1 to 3, wherein the step of inhibiting further operation of the wireless application comprises a step of forwarding an alert message to a system administrator (20).

5. A method as claimed in any one of claim 1 to 4, wherein the step of inhibiting further operation of the wireless application comprises a step of triggering one or more auto-corrective actions.

6. A method as claimed in claim 5, wherein the step of triggering one or more auto-corrective actions comprises any one or more of:
limiting bandwidth allocated to the wireless application;
limiting a maximum permissible message flow rate of the wireless application; and
executing a script on the terminal device to address a known issue of the wireless application.

7. A method as claimed in any one of claim 1 to 4, wherein the step of inhibiting further operation of the wireless application comprises a step of quarantining the wireless application.

8. A method as claimed in claim 7, wherein the step of quarantining the wireless application comprises a step of blocking messages of the wireless application to/from the terminal device (8).

9. A method as claimed in claim 8, wherein the step of quarantining the wireless application further comprises a step of freezing execution of the application logic on the application gateway (2).

10. A method as claimed in claim 9, further comprising a step of saving queued messages of the wireless application.

11. A method as claimed in claim 7, wherein the step of quarantining the wireless application comprises steps of:
determining whether or not an upgrade of the wireless application is available; and
if an upgrade is available, forcing installation of the upgrade on the terminal device.

12. A method as claimed in claim 11, further comprising a step of forcing deletion of the wireless application if an upgrade is not available.

13. A method as claimed in any one of claims 7 to 12, further comprising a step of subsequently unquarantining the wireless application.

14. An Application Gateway (2) of a wireless network (4) adapted to detect and manage malicious operation of a wireless application executing on a terminal device (8) of the wireless network (4), the Application Gateway (2) hosting the terminal device (8) and comprising:
means for executing application logic of the wireless application;
means (12) for monitoring execution of the wireless application to detect symptoms of malicious operation;
means (12) for detecting symptoms of malicious operation; and
means (18) for inhibiting further operation of the wireless application on the terminal device (8) if one or more symptoms of malicious operation are detected.

15. A system for detecting and managing malicious operation of a wireless application executing on a terminal device (8) of a wireless network (4), the system comprising:
a wireless network (4);
a data network (6);
an Application Gateway (AG) (2) coupled between the wireless network 4 and the data network 6; and
one or more wireless terminal devices (8) coupled to the wireless network (4) and hosted by the application gateway (2);
the Application Gateway (2) adapted to execute application logic of the wireless application and comprising:
means (12) for monitoring execution of the wireless application to detect symptoms of malicious operation;
means (12) for detecting symptoms of malicious operation; and
means (18) for inhibiting further operation of the wireless application on the terminal device (8) if one or more symptoms of malicious operation are detected.

## Patentansprüche

1. Verfahren zur Erkennung und Verwaltung der bösartigen Operation einer drahtlosen Anwendung, die auf einem Endgerät (8) eines drahtlosen Netzwerks (4) ausgeführt wird, das Verfahren umfassend die folgenden Schritte:
in einem Anwendungsgateway (2) zum Hosten des Endgeräts (8), das Ausführen von Anwendungslogik der drahtlosen Anwendung; und
in dem Anwendungsgateway (2):
das Überwachen der Ausführung der drahtlosen Anwendung, um Symptome bösartiger Operation zu erkennen; und
wenn ein oder mehrere Symptome bösartiger Operation erkannt werden, das Hemmen der weiteren Operation der drahtlosen Anwendung.

2. Verfahren gemäß Anspruch 1, wobei der Schritt des Überwachens der Ausführung der drahtlosen Anwendung die folgenden Schritte umfasst:
das Sammeln einer oder mehrerer Kennziffern, die der Ausführung der drahtlosen Anwendung zugeordnet sind; und
das Vergleichen jeder Kennziffer mit einem jeweiligen vordefinierten Schwellenwert.

3. Verfahren gemäß Anspruch 2, wobei die Kennziffern eines oder mehrere von Folgendem umfassen:
eine Anzahl von gesendeten/empfangenen Nachrichten;
eine Anzahl von Verarbeitungsfehlern;
einen Typ von Verarbeitungsfehler; und
eine Nachrichtendurchflussrate.

4. Verfahren gemäß einem der Ansprüche 1 bis 3, wobei der Schritt des Hemmens der weiteren Operation der drahtlosen Anwendung einen Schritt des Weiterleitens einer Alarmmeldung an einen Systemadministrator (20) umfasst.

5. Verfahren gemäß einem der Ansprüche 1 bis 4, wobei der Schritt des Hemmens der weiteren Operation der drahtlosen Anwendung einen Schritt des Auslösens einer oder mehrerer Autokorrekturmaßnahmen umfasst.

6. Verfahren gemäß Anspruch 5, wobei der Schritt des Auslösens einer oder mehrerer Autokorrekturmaßnahmen eines oder mehrere von Folgendem umfasst:
das Beschränken der Bandbreite, die der drahtlosen Anwendung zugeordnet ist;
das Beschränken einer maximal zulässigen Nachrichtendurchflussrate der drahtlosen Anwendung; und
das Ausführen eines Skripts in dem Endgerät, um ein bekanntes Problem der drahtlosen Anwendung zu beheben.

7. Verfahren gemäß einem der Ansprüche 1 bis 4, wobei der Schritt des Hemmens der weiteren Operation der drahtlosen Anwendung einen Schritt des Unter-Quarantäne-Stellens der drahtlosen Anwendung umfasst.

8. Verfahren gemäß Anspruch 7, wobei der Schritt des Unter-Quarantäne-Stellens der drahtlosen Anwendung einen Schritt des Sperrens von Nachrichten der drahtlosen Anwendung zu/von dem Endgerät (8) umfasst.

9. Verfahren gemäß Anspruch 8, wobei der Schritt des Unter-Quarantäne-Stellens der drahtlosen Anwendung des Weiteren einen Schritt des Einfrierens der Ausführung der Anwendungslogik auf dem Anwendungsgateway (2) umfasst.

10. Verfahren gemäß Anspruch 9, des Weiteren umfassend einen Schritt des Speicherns in Warteschlange befindlicher Nachrichten der drahtlosen Anwendung.

11. Verfahren gemäß Anspruch 7, wobei der Schritt des Unter-Quarantäne-Stellens der drahtlosen Anwendung die folgenden Schritte umfasst:
das Ermitteln, ob ein Upgrade der drahtlosen Anwendung verfügbar ist oder nicht; und
wenn ein Upgrade verfügbar ist, das Erzwingen der Installation des Upgrades auf dem Endgerät.

12. Verfahren gemäß Anspruch 11, des Weiteren umfassend einen Schritt des Erzwingens der Löschung der drahtlosen Anwendung, wenn kein Upgrade verfügbar ist.

13. Verfahren gemäß einem der Ansprüche 7 bis 12, des Weiteren umfassend einen Schritt des anschließenden Aus-der-Quarantäne-Nehmens der drahtlosen Anwendung.

14. Anwendungsgateway (2) eines drahtlosen Netzwerks (4), das dazu eingerichtet ist, die bösartige Operation einer drahtlosen Anwendung zu erkennen und zu verwalten, die auf einem Endgerät (8) des drahtlosen Netzwerks (4) ausgeführt wird, wobei das Anwendungsgateway (2) das Endgerät (8) hostet und umfasst:
Mittel zum Ausführen von Anwendungslogik der drahtlosen Anwendung;
Mittel (12) zum Überwachen der Ausführung der drahtlosen Anwendung, um Symptome bösartiger Operation zu erkennen;
Mittel (12) zum Erkennen von Symptomen bösartiger Operation; und
Mittel (18) zum Hemmen der weiteren Operation der drahtlosen Anwendung auf dem Endgerät (8), wenn ein oder mehrere Symptome bösartiger Operation erkannt werden.

15. System zur Erkennung und Verwaltung der bösartigen Operation einer drahtlosen Anwendung, die auf einem Endgerät (8) eines drahtlosen Netzwerks (4) ausgeführt wird, das System umfassend:
ein drahtloses Netzwerk (4);
ein Datennetzwerk (6);
ein Anwendungsgateway (Application Gateway - AG) (2), das zwischen das drahtlose Netzwerk (4) und das Datennetzwerk (6) gekoppelt ist; und
ein oder mehrere drahtlose Endgeräte (8), die mit dem drahtlosen Netzwerk (4) gekoppelt sind und durch das Anwendungsgateway (2) gehostet werden;
wobei das Anwendungsgateway (2) dazu eingerichtet ist, Anwendungslogik der drahtlosen Anwendung auszuführen, und umfasst:
Mittel (12) zum Überwachen der Ausführung der drahtlosen Anwendung, um Symptome bösartiger Operation zu erkennen;
Mittel (12) zum Erkennen von Symptomen bösartiger Operation; und
Mittel (18) zum Hemmen der weiteren Operation der drahtlosen Anwendung auf dem Endgerät (8), wenn ein oder mehrere Symptome bösartiger Operation erkannt werden.

## Revendications

1. Un procédé pour détecter et gérer un fonctionnement malveillant d'une application sans fil s'exécutant sur un dispositif terminal (8) d'un réseau sans fil (4), le procédé comportant les étapes suivantes :
dans une passerelle d'application (2) pour héberger le dispositif terminal (8), exécuter une logique d'application de l'application sans fil ; et
dans la passerelle d'application (2) :
surveiller l'exécution de l'application sans fil pour détecter des symptômes de fonctionnement malveillant ; et
si un ou plusieurs symptômes de fonctionnement malveillant sont détectés, inhiber un fonctionnement ultérieur de l'application sans fil.

2. Un procédé tel que revendiqué dans la revendication 1, où l'étape de surveiller l'exécution de l'application sans fil comporte les étapes suivantes :
accumuler une ou plusieurs mesures associées à l'exécution de l'application sans fil ; et
comparer chaque mesure à une valeur de seuil prédéterminée respective.

3. Un procédé tel que revendiqué dans la revendication 2, où les mesures comportent un ou plusieurs éléments parmi :
plusieurs messages envoyés/reçus ;
plusieurs erreurs de traitement ;
un type d'erreur de traitement ; et
un flux de messages.

4. Un procédé tel que revendiqué dans n'importe laquelle des revendications 1 à 3, où l'étape d'inhiber un fonctionnement ultérieur de l'application sans fil comporte une étape de transférer un message d'alerte à un administrateur de système (20).

5. Un procédé tel que revendiqué dans n'importe laquelle des revendications 1 à 4, où l'étape d'inhiber un fonctionnement ultérieur de l'application sans fil comporte une étape de déclencher une ou plusieurs actions auto-correctrices.

6. Un procédé tel que revendiqué dans la revendication 5, où l'étape de déclencher une ou plusieurs actions auto-correctrices comporte une ou plusieurs actions parmi :
limiter la largeur de bande allouée à l'application sans fil ;
limiter un flux de messages permissible maximum de l'application sans fil ; et
exécuter un script sur le dispositif terminal pour faire face à un problème connu de l'application sans fil.

7. Un procédé tel que revendiqué dans n'importe laquelle des revendications 1 à 4, où l'étape d'inhiber un fonctionnement ultérieur de l'application sans fil comporte une étape de mettre en quarantaine l'application sans fil.

8. Un procédé tel que revendiqué dans la revendication 7, où l'étape de mettre en quarantaine l'application sans fil comporte une étape de bloquer les messages de l'application sans fil au/en provenance du dispositif terminal (8).

9. Un procédé tel que revendiqué dans la revendication 8, où l'étape de mettre en quarantaine l'application sans fil comporte de plus une étape de figer l'exécution de la logique d'application sur la passerelle d'application (2).

10. Un procédé tel que revendiqué dans la revendication 9, comportant de plus une étape de sauvegarder les messages en attente de l'application sans fil.

11. Un procédé tel que revendiqué dans la revendication 7, où l'étape de mettre en quarantaine l'application sans fil comporte les étapes suivantes :
déterminer si une mise à niveau de l'application sans fil est disponible ou non ; et
si une mise à niveau est disponible, forcer l'installation de la mise à niveau sur le dispositif terminal.

12. Un procédé tel que revendiqué dans la revendication 11, comportant de plus une étape de forcer la suppression de l'application sans fil si une mise à niveau n'est pas disponible.

13. Un procédé tel que revendiqué dans n'importe laquelle des revendications 7 à 12, comportant de plus une étape consistant à sortir ensuite de quarantaine l'application sans fil.

14. Une passerelle d'application (2) d'un réseau sans fil (4) adaptée pour détecter et gérer un fonctionnement malveillant d'une application sans fil s'exécutant sur un dispositif terminal (8) du réseau sans fil (4), la passerelle d'application (2) hébergeant le dispositif terminal (8) et comportant :
un moyen pour exécuter une logique d'application de l'application sans fil ;
un moyen (12) pour surveiller l'exécution de l'application sans fil afin de détecter des symptômes de fonctionnement malveillant ;
un moyen (12) pour détecter des symptômes de fonctionnement malveillant ; et
un moyen (18) pour inhiber un fonctionnement ultérieur de l'application sans fil sur le dispositif terminal (8) si un ou plusieurs symptômes de fonctionnement malveillant sont détectés.

15. Un système pour détecter et gérer un fonctionnement malveillant d'une application sans fil s'exécutant sur un dispositif terminal (8) d'un réseau sans fil (4), le système comportant :
un réseau sans fil (4) ;
un réseau de données (6) ;
une passerelle d'application (AG) (2) couplée entre le réseau sans fil (4) et le réseau de données (6) ; et
un ou plusieurs dispositifs terminaux sans fil (8) couplés au réseau sans fil (4) et hébergés par la passerelle d'application (2) ;
la passerelle d'application (2) adaptée pour exécuter une logique d'application de l'application sans fil et comportant :
un moyen (12) pour surveiller l'exécution de l'application sans fil afin de détecter des symptômes de fonctionnement malveillant ;
un moyen (12) pour détecter des symptômes de fonctionnement malveillant ; et
un moyen (18) pour inhiber un fonctionnement ultérieur de l'application sans fil sur le dispositif terminal (8) si un ou plusieurs symptômes de fonctionnement malveillant sont détectés.
